# EUROPEAN PATENT SPECIFICATION

(11) **EP 3 327 097 B1**
(45) Date of publication and mention of the grant of the patent: **16.09.2020**
(21) Application number: 16835115.3
(22) Date of filing: 05.08.2016
(51) Int. Cl.: C09D 201/04, C09D 5/02, C09D 183/04

(54) **COATING MATERIAL AND LAMINATE**
BESCHICHTUNGSMATERIAL UND LAMINAT
MATÉRIAU DE REVÊTEMENT ET STRATIFIÉ

(30) Priority: 07.08.2015 JP 2015157664
(43) Date of publication of application: 30.05.2018
(73) Proprietor: Daikin Industries, Ltd., Osaka-shi, Osaka 530-8323 (JP)
(72) Inventor: KUBOTA, Kouji, Osaka-shi Osaka 530-8323 (JP); OYA, Akiko, Osaka-shi Osaka 530-8323 (JP); KAGAWA, Michiru, Osaka-shi Osaka 530-8323 (JP); NANBA, Yoshinori, Osaka-shi Osaka 530-8323 (JP); YAMAGUCHI, Hiroki, Osaka-shi Osaka 530-8323 (JP)
(74) Representative: Hoffmann Eitle
(86) International application number: PCT/JP2016/073198
(87) International publication number: WO 2017/026418

(56) References cited:
- WO-A1-98/22530
- WO-A1-2011/048930
- JP-A- H10 316 820
- JP-A- 2004 143 452
- JP-A- 2006 291 372
- JP-A- 2008 223 003
- JP-A- 2015 174 909

## Description

### TECHNICAL FIELD

The invention relates to coating materials and laminates.

### BACKGROUND ART

Patent Literature 1 discloses a fluororubber coating composition containing a vinylidene fluoride copolymer (A), an aminoorganosilicon compound (B), a fluororesin emulsion (C), a vulcanizer (D), and a solvent (E), wherein the fluororesin in the component (C) preferably has an average particle size of 5 µm or smaller.

Patent Literature 2 discloses a designable powder coating composition containing crystalline polytetrafluoroethylene having an average particle diameter of 0.05 to 5 µm in an amount of 0.01 to 5 parts by mass per 100 parts by mass of a powder coating component.

Patent Literature 3 discloses a composition for water-based coating materials containing particles of a first resin, particles of a second resin, and a watersoluble resin and/or a water-swellable resin, and also such respective amounts of water and an emulsifier as to be enough to form an emulsion of the particles of the second resin, wherein it is preferable that the particles of the first resin consist of a resin having a molecular weight of 500 to 20,000 and have an average particle size of 0.01 to 10 µm.

Patent Literature 4 discloses a positive electrode mixture coating material containing at least a positive electrode active material, a conductive material, a binding agent, and an organic solvent, wherein, preferably, the binding agent contains core/clad composite fine particles each including a core that is composed of a fluorocarbon polymer insoluble in the organic solvent and a covering clad formed from a polymer that is at least soluble in or swellable with the organic solvent, and the core/clad composite fine particles having an average particle size of 0.05 µm or greater and 1 µm or smaller.

Patent Literature 5 discloses a polytetrafluoroethylene aqueous dispersion containing polytetrafluoroethylene particles containing a tetrafluoroethylene unit alone or a tetrafluoroethylene unit and a modifying monomer unit derived from a modifying monomer copolymerizable with the tetrafluoroethylene, wherein the polytetrafluoroethylene particles have a volume average particle size of not smaller than 0.1 nm but smaller than 20 nm.

Patent Literature 6 relates to a precoated steel sheet including a photocatalyst layer. The precoated steel sheet comprises a steel sheet base, a clear coating layer (A) formed over at least one surface of the base, as well as a clear coating layer (B) superposed on the clear coating layer (A). The coating layer (A) comprises a silicone compound as a main component and contains water-repellant fine particles dispersed therein. The layer (B) contains as a main component fine titanium oxide particles that show photocatalytic activity.

### CITATION LIST

### - Patent Literature

Patent Literature 1: JP H09-157579 A
Patent Literature 2: JP 2001-311045 A
Patent Literature 3: JP H11-116849 A
Patent Literature 4: JP H11-260411 A
Patent Literature 5: WO 2014/084399
Patent Literature 6: WO 2011/048930 A1

### SUMMARY OF INVENTION

### - Technical Problem

Rubber molded articles are characterized by flexibility, but the tactile sensations thereof are not good and especially the squeakiness needs to be reduced. Additionally, when these articles are brought into contact with clothing, they suffer staining of the clothing dye.

In view of the above state of the art, the invention aims to provide a coating material capable of forming a film that is free of squeakiness and is less likely to suffer staining of clothing dye on the surface of a base such as a rubber molded article.

### - Solution to Problem

The invention relates to a coating material containing: fluororesin primary particles having an average particle size of 0.2 to 200 nm; a curable silicone resin in an amount of 0.1 to 250 mass% relative to the fluororesin primary particles; and water; wherein the fluororesin primary particles are formed from at least one selected from the group consisting of polytetrafluoroethylene, tetrafluoroethylene/perfluoro(alkyl vinyl ether) copolymers and tetrafluoroethylene/hexafluoropropylene copolymers.

The coating material can suitably be used as an agent for imparting a tactile sensation, an agent for imparting stain resistance, an agent for imparting smoothness, or an agent for imparting a refreshing sensation.

The coating material can suitably be used as a coating material for rubber, a coating material for resin, or a coating material for fiber.

The coating material is preferably applied to a base formed from at least one selected from the group consisting of fluororubber, acrylonitrile-butadiene rubber, hydrogenated acrylonitrile-butadiene rubber, styrene-butadiene rubber, polychloroprene rubber, polybutadiene rubber, natural rubber, polyisoprene rubber, ethylene-propylene rubber, ethylene-propylene-termonomer copolymerized rubber, silicone rubber, butyl rubber, epichlorohydrin rubber, urethane rubber, acrylic rubber, and chlorosulfonated polyethylene rubber, and is particularly preferably applied to a base formed from fluororubber.

The coating material is preferably to be applied to a base formed from fluororubber.

The coating material also preferably further contains a silicone oil.

The coating material preferably further contains a surfactant.

The invention also relates to a laminate including: a base; and a film that is disposed on the base and is formed from the aforementioned coating material, the film containing fluororesin primary particles having an average particle size of 0.2 to 200 nm, and the fluororesin primary particles being present as projections on the surface of the film to constitute textures on the surface of the film.

The laminate preferably satisfies that the fluororesin primary particles occupy 10% or more of the area of the surface of the film.

The base is preferably formed from at least one selected from the group consisting of fluororubber, acrylonitrile-butadiene rubber, hydrogenated acrylonitrile-butadiene rubber, styrene-butadiene rubber, polychloroprene rubber, polybutadiene rubber, natural rubber, polyisoprene rubber, ethylene-propylene rubber, ethylene-propylene-termonomer copolymerized rubber, silicone rubber, butyl rubber, epichlorohydrin rubber, urethane rubber, acrylic rubber, and chlorosulfonated polyethylene rubber, more preferably formed from fluororubber.

The base is preferably formed from fluororubber.

The laminate is preferably an accessory, an automobile interior or exterior part, a container for cosmetics, a toy, a piece of furniture, or a home appliance.

### - Advantageous Effects of Invention

Since the coating material of the invention has the aforementioned configuration, it is capable of forming a film that is free of squeakiness and is less likely to suffer staining of clothing dye on the surface of a base such as a rubber molded article. Further, use of the fluororesin particles having a small average particle size facilitate formation of a transparent film, and thus the coating material is also capable of forming a film on the surface of a base without impairing the original beauty appearance of the base to be coated.

Since the laminate of the invention has the aforementioned configuration, it is free of squeakiness and is less likely to suffer staining of clothing dye.

### BRIEF DESCRIPTION OF THE DRAWINGS

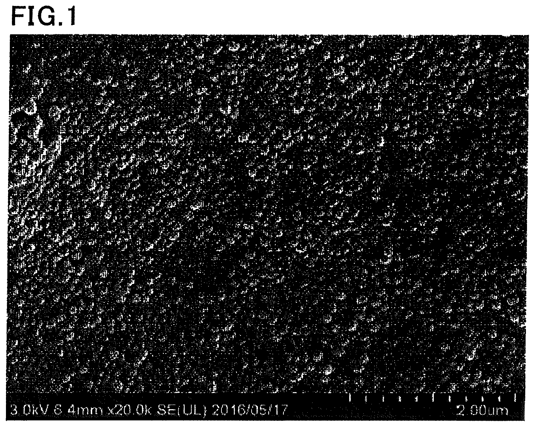

Fig. 1 is a scanning electron micrograph of an example of textures on the surface of a film.

### DESCRIPTION OF EMBODIMENTS

The invention will be specifically described hereinbelow.

The coating material of the invention contains fluororesin primary particles having an average particle size of 0.2 to 200 nm. Common fluororesin primary particles easily agglomerate to form secondary particles having a greater particle size. It is one feature of the coating material of the invention to contain fluororesin primary particles, and the primary particles are present in hardly an agglomerated state in the coating material.

The average particle size is preferably 0.5 nm or greater, more preferably 1.0 nm or greater, while preferably 100 nm or smaller, more preferably 50 nm or smaller, still more preferably 20 nm or smaller, much more preferably 10 nm or smaller, particularly preferably smaller than 5.0 nm. The average particle size within this range more facilitates formation of a transparent film.

The average particle size refers to a volume average particle size. If the average particle size is 10 nm or greater, it is measured with a transmission electron microscope (TEM), while if smaller than 10 nm, it is measured by dynamic light scattering (DLS). In the case of TEM measurement, a fluororesin aqueous dispersion obtained is diluted with deionized water such that the fluororesin solid concentration becomes 100 ppm relative to water. The diluted fluororesin aqueous dispersion is then attached to an observation Cu mesh and dried. Thereby, a sample-carrying mesh is prepared. Using a TEM, the particle sizes of the fluororesin particles on the sample-carrying mesh are observed and an electron micrograph is taken. Thereby, the average particle size is determined. In the case of DLS measurement, the average particle size is a value determined from 70 measurement processes using ELSZ-1000S (Otsuka Electronics Co., Ltd.) at 25°C with the solid concentration of the fluororesin being adjusted to 1.0 mass%. The refractive index of the solvent (water) is 1.3328, and the viscosity of the solvent (water) is 0.8878 mPa·s. The average particle size refers to an average particle size in a dispersed state as primary particles.

The fluororesin primary particles are particles formed from homo-polytetrafluoroethylene, modified polytetrafluoroethylene comprising tetrafluoroethylene units and modifying monomer units in an amount of 0.001 to 2 mol%, the modifying monomer units being derived from one or more monomers that are copolymerizable with tetrafluoroethylene (jointly referred to as PTFE in the following), and melt-fabricable fluroresins selected from tetrafluoroethylene/perfluoro(alkyl vinyl ether) (PAVE) copolymers (PFA) and tetrafluoroethylene/hexafluoropropylene (HFP) copolymers (FEP).. These are versatile and easily available, and particularly preferred is PTFE in terms of economic efficiency.

The PAVE may be PAVE represented by CF₂=CF-ORf¹ (wherein Rf¹ is a C1-C8 perfluoroalkyl group), and is preferably at least one selected from the group consisting of CF₂=CF-OCF₃, CF₂=CF-OCF₂CF₃, and CF₂=CF-OCF₂CF₂CF₃.

The melt-fabricable fluororesin preferably has a MFR of 0.1 to 500 g/10 min. The MFR of the melt-fabricable fluororesin is more preferably 1 g/10 min or more, while more preferably 300 g/10 min or less.

The MFR herein is a value determined as the mass (g/10 min) of a polymer flowed out of a nozzle (inner diameter: 2 mm, length: 8 mm) per 10 minutes using a melt indexer (Yasuda Seiki Seisakusho Ltd.) by the method in conformity with ASTM D1238 at a predetermined measurement temperature and load depending on the type of the fluororesin (for example, the temperature is 372°C for PFA and FEP, and 380°C for PTFE, and the load is 5 kg for PFA, FEP, and PTFE).

The melt-fabricable fluororesin preferably has a melting point of not lower than 150°C but lower than 324°C.

The melting point herein is a temperature corresponding to the local maximum on a heat-of-fusion curve obtained by heating 3 mg of a sample having no history of being heated up to 300°C or higher using a differential scanning calorimeter (DSC) at a temperature-increasing rate of 10°C/min.

The PFA may be any one, and is preferably a copolymer containing a TFE unit and a PAVE unit at a mole ratio (TFE unit/PAVE unit) of not less than 70/30 but less than 99/1. The mole ratio is more preferably 70/30 or more and 98.9/1.1 or less, still more preferably 80/20 or more and 98.9/1.1 or less. Too small an amount of the TFE unit tends to cause impaired mechanical properties, while too large an amount thereof tends to cause so high a melting point that the moldability tends to be impaired. The PFA is also preferably a copolymer containing 0.1 to 10 mol% of a monomer unit derived from a monomer copolymerizable with TFE and PAVE and 90 to 99.9 mol% in total of the TFE unit and the PAVE unit. Examples of the monomer copolymerizable with TFE and PAVE include HFP, vinyl monomers represented by CZ¹Z²=CZ³(CF₂)ₙZ⁴ (wherein Z¹, Z², and Z³ are the same as or different from each other, and are each a hydrogen atom or a fluorine atom; Z⁴ is a hydrogen atom, a fluorine atom, or a chlorine atom; and n is an integer of 2 to 10), and alkyl perfluorovinyl ether derivatives represented by CF₂=CF-OCH₂-Rf² (wherein Rf² is a C1-C5 perfluoroalkyl group) .

The PFA has a melting point that is lower than the melting point of the PTFE. The melting point is preferably 180°C to lower than 324°C, more preferably 230°C to 320°C, still more preferably 280°C to 320°C.

The PFA preferably has a melt flow rate (MFR) of 1 to 500 g/10 min.

The FEP may be any one, and is preferably a copolymer containing a TFE unit and a HFP unit at a mole ratio (TFE unit/HFP unit) of not less than 70/30 but less than 99/1. The mole ratio is more preferably 70/30 or more and 98.9/1.1 or less, still more preferably 80/20 or more and 98.9/1.1 or less. Too small an amount of the TFE unit tends to cause impaired mechanical properties, while too large an amount thereof tends to cause so high a melting point that the moldability tends to be impaired. The FEP is also preferably a copolymer containing 0.1 to 10 mol% of a monomer unit derived from a monomer copolymerizable with TFE and HFP and 90 to 99.9 mol% in total of the TFE unit and the HFP unit. Examples of the monomer copolymerizable with TFE and HFP include the aforementioned PAVE and alkyl perfluorovinyl ether derivatives.

The FEP has a melting point that is lower than the melting point of the PTFE. The melting point is preferably 150°C to lower than 324°C, more preferably 200°C to 320°C, still more preferably 240°C to 320°C.

The FEP preferably has a MFR of 1 to 500 g/10 min.

The PTFE may be either a homo-PTFE or a modified PTFE. The modified PTFE contains a TFE unit and a modifying monomer unit derived from a modifying monomer copolymerizable with TFE. The PTFE may be either a non-melt-fabricable, fibrillable high-molecular-weight PTFE or a melt-fabricable, non-fibrillable low-molecular-weight PTFE. The term non-melt-fabricable herein means that the melt flow rate cannot be determined at temperatures higher than the crystalline melting point in conformity with ASTM D-1238 and D-2116.

The modifying monomer may be any one copolymerizable with TFE, and examples thereof include perfluoroolefins such as hexafluoropropylene (HFP); chlorofluoroolefins such as chlorotrifluoroethylene (CTFE); hydrogen-containing fluoroolefins such as trifluoroethylene and vinylidene fluoride (VDF); perfluorovinyl ether; perfluoroalkylethylene; ethylene; and nitryl- and fluorine-containing vinyl ethers. One modifying monomer may be used, or multiple modifying monomers may be used.

The perfluorovinyl ether may be any one, and examples thereof include perfluoro unsaturated compounds represented by CF₂=CF-ORf³ (wherein Rf³ is a perfluoroorganic group). The term "perfluoroorganic group" herein means an organic group in which all the hydrogen atoms bonding to a carbon atom are replaced by fluorine atoms. The perfluoroorganic group may contain ether oxygen.

Examples of the perfluorovinyl ether include perfluoro(alkyl vinyl ether) (PAVE) represented by the above formula wherein Rf³ is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group. Preferred are perfluoromethyl vinyl ether (PMVE) in which the perfluoroalkyl group is a perfluoromethyl group and perfluoropropyl vinyl ether (PPVE) in which the perfluoroalkyl group is a perfluoropropyl group.

Examples of the perfluorovinyl ether further include those represented by the above formula wherein Rf³ is a C4-C9 perfluoro(alkoxyalkyl) group, those represented by the above formula wherein Rf³ is a group represented by the following formula: 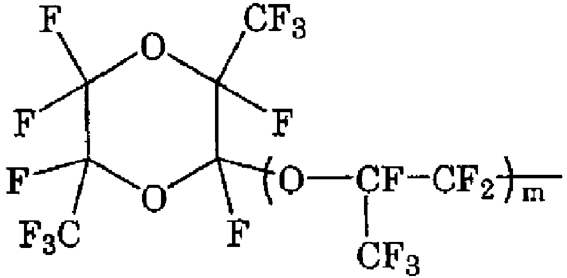 (wherein m is 0 or an integer of 1 to 4), and those represented by the above formula wherein Rf³ is a group represented by the following formula:

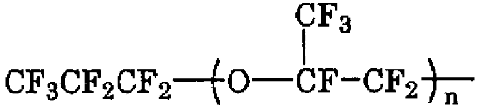

(wherein n is an integer of 1 to 4).

The perfluoroalkylethylene may be any one, and examples thereof include perfluorobutylethylene (PFBE), perfluorohexylethylene (PFHE), and perfluorooctylethylene (PFOE) .

The nitryl- and fluorine-containing vinyl ethers are more preferably fluorine-containing vinyl ethers represented by CF₂=CFORf⁴CN (wherein Rf⁴ is a C2-C7 alkylene group in which an oxygen atom may be present between two carbon atoms). An example of the nitryl- and fluorine-containing vinyl ethers is perfluoro[3-(1-methyl-2-vinyloxy-ethoxy)propionitrile] (CNVE).

The modifying monomer in the modified PTFE is preferably at least one selected from the group consisting of HFP, CTFE, VDF, PMVE, PPVE, PFBE, PFHE, CNVE, and ethylene. More preferred is at least one monomer selected from the group consisting of PMVE, PPVE, PFHE, CNVE, HFP, and CTFE.

The modified PTFE contains a modifying monomer unit in an amount within a range of 0.001 to 2 mol%, more preferably within a range of 0.001 to less than 1 mol%, still more preferably within a range of 0.001 to 0.5 mol%, particularly preferably within a range of 0.001 to 0.03 mol%.

The amounts of the monomers constituting PTFE herein can be calculated by any appropriate combination of NMR, FT-IR, elemental analysis, and X-ray fluorescence analysis in accordance with the types of the monomers.

The PTFE preferably has a melt flow rate (MFR) of 0 to 500 g/10 min. The MFR of the PTFE is more preferably less than 400 g/10 min, still more preferably 300 g/10 min or less.

The PTFE preferably has a melting point of 324°C to 360°C. The melting point is preferably 350°C or lower, more preferably 348°C or lower.

The coating material further contains a curable silicone resin. The curable silicone resin is a binder component that provides a film of the coating material. The curable silicone resin is a silicone resin crosslinkable in the presence or absence of a crosslinker at room temperature (for example, this temperature may be 10°C to 30°C) or by heating. Silicone resins crosslinkable in the absence of a crosslinker consist only of a main agent (base polymer) to be mentioned later. Silicone resins crosslinkable in the presence of a crosslinker are composed of a combination of a main agent (base polymer) and a crosslinker. For example, a room-temperature-curable silicone resin is composed of a combination of an organopolysiloxane containing a room-temperature-cure-reactive group and a crosslinker capable of crosslinking this organopolysiloxane.

The main agent (base polymer) of the curable silicone resin is an organopolysiloxane containing at least two cure-reactive groups bonding to a silicon atom per molecule.

For the organopolysiloxane which is room-temperature-curable, examples of the cure-reactive group include a hydroxy group and hydrolyzable groups. Examples of the hydrolyzable groups include: C1-C8 alkoxy groups such as a methoxy group, an ethoxy group, and a propoxy group; alkoxyalkoxy groups such as a methoxyethoxy group, an ethoxyethoxy group, and a methoxypropoxy group; acyloxy groups such as an acetoxy group, an octanoyloxy group, and a benzoyloxy group; alkenyloxy groups such as a vinyloxy group, an isopropenyloxy group, and a 1-ethyl-2-methylvinyloxy group; ketoxime groups such as a dimethyl ketoxime group, a methylethyl ketoxime group, and a diethyl ketoxime group; amino groups such as a dimethylamino group, a diethylamino group, a butylamino group, and a cyclohexylamino group; aminoxy groups such as a dimethylaminoxy group and a diethylaminoxy group; and amide groups such as an N-methylacetamide group, an N-ethylacetamide group, and N-methylbenzamide group. Preferred are alkoxy groups.

Examples of groups other than the cure-reactive groups include: alkyl groups such as a methyl group, an ethyl group, a propyl group, a butyl group, a pentyl group, a hexyl group, a heptyl group, an octyl group, a nonyl group, a decyl group, and an octadecyl group; cycloalkyl groups such as a cyclopentyl group and a cyclohexyl group; alkenyl groups such as a vinyl group, an allyl group, a butenyl group, a pentenyl group, and a hexenyl group; aryl groups such as a phenyl group, a tolyl group, a xylyl group, and an α-,β-naphthyl group; aralkyl groups such as a benzyl group, a 2-phenylethyl group, and a 3-phenylpropyl group; and those obtainable from these groups in which part or all of the hydrogen atoms is/are replaced by any of halogen atoms (e.g., F, Cl, and Br) and a cyano group, such as a 3-chloropropyl group, a 3,3,3-trifluoropropyl group, and a 2-cyanoethyl group. Preferred among these are a methyl group, an ethyl group, a vinyl group, and a phenyl group, and particularly preferred is a methyl group.

The organopolysiloxane is preferably one having a degree of polymerization such that the viscosity thereof is 20 to 1,000,000 mPa·s, preferably 100 to 500,000 mPa·s, more preferably 1,000 to 50,000 mPa·s, at 23°C. If the viscosity is lower than 20 mPa·s (at 23°C), the coating material may fail to provide a coating film having excellent physical or mechanical strength. Conversely, if the viscosity exceeds 1,000,000 mPa·s (at 23°C), the composition may be so viscous that the workability thereof in use may be poor. In the invention, the viscosity can be measured using a rotational viscometer.

The organopolysiloxane is preferably a diorganopolysiloxane containing a silanol group or a silyl group having the aforementioned hydrolyzable group at each end as represented by the following formulas, such as dimethyl polysiloxane.

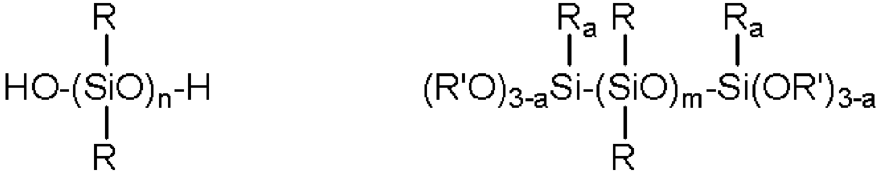

In the formulas, R is one of those mentioned as examples of the groups other than the cure-reactive groups, and R' is an alkyl group such as a methyl group, an ethyl group, or a propyl group. Further, n and m are figures that provide a viscosity of 20 to 1,000,000 mPa·s (at 23°C), and a is 0 or 1.

In the case of a room-temperature-curable organopolysiloxane containing a silanol group or a silyl group having a hydrolyzable group at each end, the crosslinker to be used is a hydrolyzable group-containing silane and/or a partially hydrolyzed condensate thereof. Silane and/or a partially hydrolyzed condensate thereof are/is one(s) having at least two hydrolyzable groups in the molecule, preferably having three or more hydrolyzable groups. Each silicon atom may be coupled with a group other than the hydrolyzable groups, and the molecular structure thereof may be either a silane structure or a siloxane structure. In the case of a siloxane structure, it may be any of linear, branched, and cyclic structures.

Examples of the hydrolyzable group include those mentioned above as examples of the hydrolyzable group, and particularly preferred are alkoxy groups, ketoxime groups, and an isopropenoxy group.

The group other than the hydrolyzable groups is a C1-C6 non-substituted or substituted monovalent hydrocarbon group, and examples thereof include alkyl groups such as a methyl group, an ethyl group, a propyl group, a butyl group, a pentyl group, and a hexyl group; cycloalkyl groups such as a cyclopentyl group and a cyclohexyl group; aryl groups such as a phenyl group and a tolyl group; aralkyl groups such as a benzyl group and a 2-phenylethyl group; alkenyl groups such as a vinyl group, an allyl group, a butenyl group, a pentenyl group, and a hexenyl group; and halogenated alkyl groups such as a 3,3,3-trifluoropropyl group and a 3-chloropropyl group. Preferred among these are a methyl group, an ethyl group, a phenyl group, and a vinyl group.

Specific examples of the crosslinker include ethyl silicate, propyl silicate, methyltrimethoxysilane, methyltriethoxysilane, vinyltrimethoxysilane, vinyltriethoxysilane, methyl tris(methoxyethoxy)silane, vinyl tris(methoxyethoxy)silane, methyltripropenoxysilane, methyltriacetoxysilane, vinyltriacetoxysilane, methyl tri(methylethylketoxime)silane, vinyl tri(methylethylketoxime)silane, phenyl tri(methylethylketoxime)silane, propyl tri(methylethylketoxime)silane, tetra(methylethylketoxime)silane, 3,3,3-trifluoropropyl tri(methylethylketoxime)silane, 3-chloropropyl tri(methylethylketoxime)silane, methyl tri(dimethylketoxime)silane, methyl tri(diethylketoxime)silane, methyl tri(methylisopropylketoxime)silane, and tri(cyclohexanoxime)silane, and partially hydrolyzed condensates thereof. These may be used alone or in combination of two or more.

The amount of the crosslinker is preferably 0.5 to 20 parts by mass, more preferably 1 to 10 parts by mass, relative to 100 parts by mass of the organopolysiloxane. Less than 0.5 parts by mass of the crosslinker may cause insufficient crosslinking. Conversely, more than 20 parts by mass thereof may cause problems such as too hard a cured product and an economic disadvantage.

When the main agent is a room-temperature-curable organopolysiloxane, a catalyst for promoting the curing may be added. Examples of such a curing catalyst include various catalysts used for condensation-curing-type room-temperature-curable compositions. Specific examples thereof include organic carboxylic acid metal salts such as lead-2-ethyloctoate, dibutyltin dioctoate, dibutyltin acetate, dibutyltin dilaurate, butyltin-2-ethylhexoate, iron-2-ethylhexoate, cobalt-2-ethylhexoate, manganese-2-ethylhexoate, zinc-2-ethylhexoate, stannous caprylate, tin naphthenate, tin oleate, tin butanoate, titanium naphthenate, zinc naphthenate, cobalt naphthenate, and zinc stearate; organic titanates such as tetrabutyl titanate, tetra-2-ethylhexyl titanate, triethanolamine titanate, and tetra(isopropenyloxy)titanate; organotitanium compounds organotitanium chelates such as organosiloxy titanium, β-carbonyl titanium, diisopropoxytitanium bis(ethylacetoacetate), and titanium tetra(acetylacetonate); aminoalkyl-substituted alkoxysilanes such as alkoxy aluminum compounds, 3-aminopropyltriethoxysilane, and N-(trimethoxysilylpropyl)ethylenediamine; amine compounds such as hexylamine and dodecylamine phosphate and salts thereof; alkali metal lower fatty acid salts such as potassium acetate, sodium acetate, and lithium oxalate; dialkylhydroxylamines such as dimethylhydroxylamine and diethylhydroxylamine; and guanidyl-containing silane and siloxane represented by the following formulas. 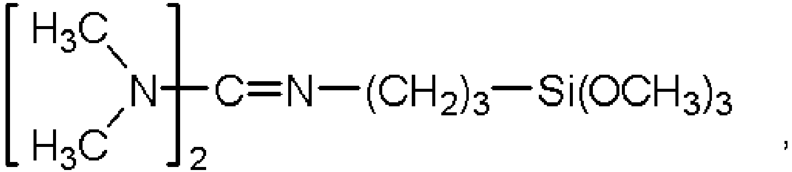 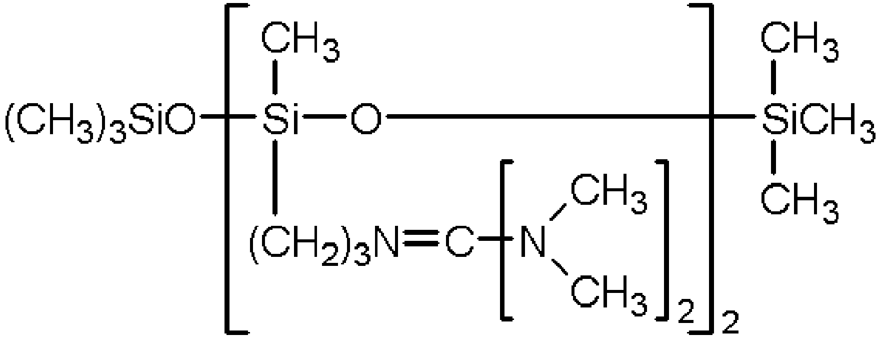 These may be used alone or in combination of two or more.

The curing catalyst, when used, may be used in any amount that is effective as a catalyst. The amount thereof is usually preferably 0.01 to 20 parts by mass, particularly preferably 0.1 to 10 parts by mass, relative to 100 parts by mass of the organopolysiloxane. When this catalyst is used, too small an amount of the catalyst may cause insufficient curability of a composition to be obtained for some types of a crosslinker, while too large an amount thereof may cause reduced storage stability of a composition to be obtained.

Specific examples of the curable silicone resin include, but are not limited to, Polon MF-56, Polon MF-40, Polon MF-23, Polon MF-20, Polon MF-206, Polon MWS, KM-2002L-1, KM-2002T, X-51-1318, X-52-1631, and KM-9749 (Shin-Etsu Chemical Co., Ltd.), and IE7170 (Dow Corning Toray Co., Ltd.).

One of the curable silicone resins may be used, or two or more thereof may be used.

In the coating material, the amount of the curable silicone resin (amount of active ingredient) is 0.1 to 250 mass%, preferably 1.0 mass% or more, more preferably 10 mass% or more, while preferably 150 mass% or less, more preferably 100 mass% or less, relative to the fluororesin primary particles. Less than 0.1 mass% thereof relative to the fluororesin primary particles causes easy separation of the fluororesin particles from the base surface, resulting in mottle on the appearance of the coated surface and a failure in stably maintaining the functions as an agent for imparting a tactile sensation, an agent for imparting stain resistance, an agent for imparting smoothness, or an agent for imparting a refreshing sensation for a long time. Thus, such an amount is not preferred in practical use. More than 250 mass% thereof causes squeakiness due to a silicone film.

The coating material may further contain a silicone oil in order to control the tactile sensations or refreshing sensations in accordance with the sensitivity and taste of persons. The silicone oil contains linearly extended siloxane bonds. The curable silicone resin is capable of forming a three-dimensional crosslinking structure of siloxane bonds by a crosslinking reaction (curing reaction). In contrast, the silicone oil cannot form such a crosslinking structure.

Examples of the silicone oil include compounds having a linear siloxane structure represented by the following formula:

R¹R²R³SiO- [R⁴R⁵SiO]ₚ[R⁶R⁷SiO]_{q}-SiR⁸R⁹R¹⁰

(wherein R¹ to R¹⁰ are each independently an alkyl group, an aryl group, or another organic group; p and q are integers that allow the viscosity to fall within the range to be mentioned later) and compounds derived from the above compounds having a linear siloxane structure in which the substituents R¹ to R¹⁰ are replaced by other substituents. The alkyl group in each of the substituents R¹ to R¹⁰ is usually a C1-C12 alkyl group, and specific examples thereof include a methyl group and an ethyl group. The aryl group may be a phenyl group, for example.

Specific examples of this silicone oil include dimethyl silicone oil, phenyl methyl silicone oil, alkyl/aralkyl-modified silicone oil, fluorosilicone oil, polyether-modified silicone oil, fatty acid ester-modified silicone oil, methyl hydrogen silicone oil, silanol-containing silicone oil, alkoxy-containing silicone oil, phenol-containing silicone oil, methacryl-modified silicone oil, amino-modified silicone oil, carboxy-modified silicone oil, carbinol-modified silicone oil, epoxy-modified silicone oil, mercapto-modified silicone oil, fluorine-modified silicone oil, and polyether-modified silicone oil. These silicone oils may be used alone or may be used in combination of two or more. The silicone oil usually has a viscosity of 1 to 200,000 mPa·s at 25°C.

Those having water-dispersibility owing to modification among these silicone oils can be used as they are. Still, common silicone oils are preferably emulsified with an emulsifier before use, for example.

Specific examples of the silicone oil emulsion include, but are not limited to, Polon MF-14, Polon MF-14E, Polon MF-18T, Polon MF-51, Polon MF-52, Polon MF-140, X-51-1178, and X-51-1264 (Shin-Etsu Chemical Co., Ltd.), and FZ-4658, FZ-4634EX, SM8709SR, SM8716SR, FZ-4602, and BY22-818EX (Dow Corning Toray Co., Ltd.).

The amount of the silicone oil is preferably 0.1 to 100 mass%, more preferably 1 to 50 mass%, relative to the curable silicone resin. More than 100 mass% thereof may cause a film of the curable silicone resin to be brittle and may cause a failure in maintaining the functions as an agent for imparting a tactile sensation, an agent for imparting stain resistance, an agent for imparting smoothness, or an agent for imparting a refreshing sensation for a long time.

The coating material further contains water. The presence of water allows the fluororesin to be present as primary particles in the coating material. The presence of water also facilitates application of the coating material.

The coating material preferably contains 0.1 to 50 mass%, more preferably 0.5 mass% or more, still more preferably 1.0 mass% or more, while more preferably 20 mass% or less, still more preferably 10 mass% or less, of the fluororesin primary particles relative to the coating material. Too large an amount of the fluororesin primary particles may cause a difficulty in forming a transparent film, possibly impairing the good appearance that a base to be coated originally has. Too small an amount of the fluororesin primary particles may cause a failure in forming a film exerting the effects desired.

The concentration of the fluororesin primary particles refers to a percentage (solid concentration) of the mass of heating residue relative to the mass (1 g) of the coating material when 1 g of the coating material is dried in an air-flow dryer at 300°C for 60 minutes.

The coating material preferably further contains a surfactant. The presence of the surfactant can prevent agglomeration and settling of the fluororesin primary particles during storage of the coating material.

The surfactant is preferably a nonionic surfactant, more preferably a non-fluorinated nonionic surfactant.

Examples of the nonionic surfactant include etheric nonionic surfactants such as polyoxyethylene alkyl phenyl ethers, polyoxyethylene alkyl ethers, and polyoxyethylene alkylene alkyl ethers; polyoxyethylene derivatives such as ethylene oxide/propylene oxide block copolymers; ester nonionic surfactants such as sorbitan fatty acid esters, polyoxyethylene sorbitan fatty acid esters, polyoxyethylene sorbitol fatty acid esters, glycerol fatty acid esters, and polyoxyethylene fatty acid esters; and amine nonionic surfactants such as polyoxyethylene alkyl amines and alkyl alkanolamides. These surfactants are non-fluorinated nonionic surfactants.

The nonionic surfactant is particularly preferably a polyoxyethylene alkyl ether.

The coating material may contain 3 to 150 mass% of the surfactant relative to the fluororesin primary particles. The amount of the surfactant is more preferably 10 mass% or more, still more preferably 30 mass% or more, particularly preferably 50 mass% or more, while more preferably 100 mass% or less, still more preferably 80 mass% or less, particularly preferably 70 mass% or less, relative to the fluororesin primary particles.

In order to improve the wettability in applying the coating material to a base, the coating material may further contain an alcohol represented by the structural formula: R¹¹-OH (wherein R¹¹ is a C3-C20 hydrocarbon group) . The alcohol may be a secondary or tertiary alcohol. The amount of the alcohol is 0.1 to 30 mass%, preferably 0.1 to 20 mass%, more preferably 0.2 to 15 mass%, relative to 100 mass% of the coating material.

If necessary, the coating material may contain additives such as a film-forming aid, an antifreeze agent, a pigment, a filler, a pigment dispersant, an antifoam, a leveling agent, a rheology modifier, a preservative, an ultraviolet absorber, an antioxidant, a flatting agent, a lubricant, a vulcanizing agent, a thickening agent, a pH modifier, an antistatic, an antibiotic, and a flame retardant. Required additives may be added and stir-mixed by a known method.

The coating material may be free of a polymer other than the fluororesin or the curable silicone resin.

The coating material can suitably be used as an agent for imparting a tactile sensation, an agent for imparting stain resistance, an agent for imparting smoothness, or an agent for imparting a refreshing sensation. A film formed from the coating material on the surface of a molded article or fiber can impart a good tactile sensation, stain resistance, smoothness, or refreshing sensation to the molded article or fiber.

The coating material can suitably be used as a coating material for rubber, a coating material for resin, or a coating material for fiber. The coating material is capable of forming a film that is free of squeakiness and is less likely to suffer staining of clothing dye on the surface of a rubber molded article, resin molded article, or fiber. The coating material can impart a good tactile sensation, stain resistance, smoothness, and refreshing sensation to the rubber molded article, resin molded article, or fiber.

Examples of the fiber include animal or vegetable natural fibers such as cotton, hemp, wool, and silk; synthetic fibers such as polyamide, polyester, polyvinyl alcohol, polyacrylonitrile, polyvinyl chloride, polypropylene, and acrylic fibers; semisynthetic fibers such as rayon and acetate fibers; inorganic fibers such as glass fibers and carbon fibers, and fiber mixtures thereof. Preferred among these are fibers formed from at least one selected from the group consisting of polyester and polypropylene.

The coating material is preferably applied to a base formed from at least one selected from the group consisting of fluororubber, acrylonitrile-butadiene rubber (NBR), hydrogenated acrylonitrile-butadiene rubber (HNBR), styrene-butadiene rubber (SBR), polychloroprene rubber (CR), polybutadiene rubber (BR), natural rubber (NR), polyisoprene rubber (IR), ethylene-propylene rubber (EPM), ethylene-propylene-termonomer copolymerized rubber (EPDM), silicone rubber, butyl rubber, epichlorohydrin rubber, urethane rubber, acrylic rubber (ACM), and chlorosulfonated polyethylene rubber (CSM), more preferably applied to a base formed from at least one selected from the group consisting of fluororubber, natural rubber (NR), polyisoprene rubber (IR), ethylene-propylene-termonomer copolymerized rubber (EPDM), butyl rubber, and acrylic rubber (ACM), and particularly preferably applied to a base formed from fluororubber.

For example, the coating material may be applied to the base by a method including applying the coating material to the base and then drying the coating material. Examples of the application technique include spray coating, roll coating, coating with a doctor blade, dip (immersion) coating, impregnation coating, spin-flow coating, and curtain-flow coating. Preferred among these are dip (immersion) coating and spray coating.

The drying is preferably performed at 100°C to 200°C for 0.5 to 10 minutes.

The invention also relates to a laminate including a base and a film that is disposed on the base and is formed from the coating material, the film containing fluororesin primary particles having an average particle size of 0.2 to 200 nm, and the fluororesin primary particles being present as projections on the surface of the film to constitute textures on the surface of the film.

In the laminate of the invention, the fluororesin primary particles preferably occupy 10% or more of the area of the surface of the film. This area proportion is more preferably 30% or more, still more preferably 50% or more, particularly preferably 70% or more. Less than 10% thereof may cause an insufficient function as an agent for imparting a tactile sensation, an agent for imparting stain resistance, an agent for imparting smoothness, or an agent for imparting a refreshing sensation. The area proportion may be 100% or less.

The area proportion of the fluororesin primary particles on the surface of the film can be determined using a scanning electron microscopic (SEM) image. Specifically, a SEM image is prepared which has a quadrilateral shape with four right angles and which enables distinction among 100 or more fluororesin primary particles having an average particle size within the range of 0.2 to 200 nm (for example, see Fig. 1), and the area proportion occupied by the fluororesin primary particles on the surface of the film in this image is defined as the aforementioned area proportion.

The base preferably has textures on the surface. The presence of textures on the surface can improve the wettability of the coating material to the base and facilitate coating of the base with a film exerting the effects desired. The textures can be made by embossing or texturing.

The base is preferably formed from at least one selected from the group consisting of fluororubber, acrylonitrile-butadiene rubber (NBR), hydrogenated acrylonitrile-butadiene rubber (HNBR), styrene-butadiene rubber (SBR), polychloroprene rubber (CR), polybutadiene rubber (BR), natural rubber (NR), polyisoprene rubber (IR), ethylene-propylene rubber (EPM), ethylene-propylene-termonomer copolymerized rubber (EPDM), silicone rubber, butyl rubber, epichlorohydrin rubber, urethane rubber, acrylic rubber (ACM), and chlorosulfonated polyethylene rubber (CSM), more preferably formed from at least one selected from the group consisting of fluororubber, natural rubber (NR), polyisoprene rubber (IR), ethylene-propylene-termonomer copolymerized rubber (EPDM), butyl rubber, and acrylic rubber (ACM), and still more preferably formed from fluororubber.

The fluororubber may be either partially fluorinated rubber or perfluororubber.

Examples of the partially fluorinated rubber include vinylidene fluoride (VdF) fluororubber, tetrafluoroethylene (TFE)/propylene (Pr) fluororubber, tetrafluoroethylene (TFE)/propylene/vinylidene fluoride (VdF) fluororubber, ethylene/hexafluoropropylene (HFP) fluororubber, ethylene/hexafluoropropylene (HFP)/vinylidene fluoride (VdF) fluororubber, and ethylene/hexafluoropropylene (HFP)/tetrafluoroethylene (TFE) fluororubber. Preferred among these is at least one selected from the group consisting of vinylidene fluoride fluororubber and tetrafluoroethylene/propylene fluororubber.

The vinylidene fluoride fluororubber is preferably a copolymer containing 45 to 85 mol% of vinylidene fluoride and 55 to 15 mol% of at least one different monomer copolymerizable with vinylidene fluoride. More preferred is a copolymer containing 50 to 80 mol% of vinylidene fluoride and 50 to 20 mol% of at least one different monomer copolymerizable with vinylidene fluoride.

Examples of the at least one different monomer copolymerizable with vinylidene fluoride include tetrafluoroethylene (TFE), hexafluoropropylene (HFP), fluoroalkyl vinyl ether, chlorotrifluoroethylene (CTFE), trifluoroethylene, trifluoropropylene, pentafluoropropylene, trifluorobutene, tetrafluoroisobutene, hexafluoroisobutene, vinyl fluoride, fluoromonomers represented by CH₂=CFRf⁵ (wherein Rf⁵ is a C1-C12 linear or branched fluoroalkyl group), fluoromonomers represented by CH₂=CH-(CF₂)ₙ-X (wherein X is H or F and n is an integer of 3 to 10), monomers such as those giving a crosslinking site; and non-fluorinated monomers such as ethylene, propylene, and alkyl vinyl ethers. These may be used alone or in any combination. Preferred among these is at least one selected from the group consisting of TFE, HFP, fluoroalkyl vinyl ether, and CTFE. The fluoroalkyl vinyl ether is preferably at least one selected from the group consisting of CF₂=CF-OCF₃, CF₂=CF-OCF₂CF₃, and CF₂=CF-OCF₂CF₂CF₃.

Examples of the vinylidene fluoride fluororubber include VdF/HFP rubber, VdF/HFP/TFE rubber, VdF/CTFE rubber, VdF/CTFE/TFE rubber, VDF/CF₂=CF-OCF₃ rubber, VDF/PMVE/TFE rubber, VDF/PMVE/TFE/HFP rubber, VDF/CH₂=CFCF₃ rubber, and VDF/TFE/CH₂=CFCF₃ rubber.

The VDF/HFP rubber is preferably a copolymer containing 40 to 99.5 mol% of VDF and 0.5 to 60 mol% of HFP, more preferably a copolymer containing 50 to 85 mol% of VDF and 20 to 50 mol% of HFP.

The tetrafluoroethylene/propylene fluororubber is preferably a copolymer containing 45 to 70 mol% of tetrafluoroethylene, 55 to 30 mol% of propylene, and 0 to 5 mol% of a fluoromonomer giving a crosslinking site.

The fluororubber preferably has a Mooney viscosity ML(1+10) of 10 or higher, more preferably 20 or higher, still more preferably 30 or higher, at 100°C. In order to achieve good processability, this Mooney viscosity is preferably 120 or lower, more preferably 100 or lower, still more preferably 80 or lower.

The Mooney viscosity can be determined using a Mooney viscometer MV2000E (Alpha Technologies Inc.) at 170°C or 140°C and at 100°C in conformity with JIS K6300.

The base may be in the form of a fiber. Examples of the fibrous base include animal or vegetable natural fibers such as cotton, hemp, wool, and silk; synthetic fibers such as polyamide, polyester, polyvinyl alcohol, polyacrylonitrile, polyvinyl chloride, polypropylene, and acrylic fibers; semisynthetic fibers such as rayon and acetate fibers; inorganic fibers such as glass fibers and carbon fibers; and fiber mixtures thereof. Preferred among these are fibrous bases formed from at least one selected from the group consisting of polyester and polypropylene.

The laminate of the invention may be any of various articles including a film formed from the coating material on at least part of the surface. The laminate of the invention is preferably an accessory, an automobile interior or exterior part, a container for cosmetics, a toy, a piece of furniture, or a home appliance.

The laminate of the invention may be a rubber molded article, a resin molded article, or a fiber.

The laminate of the invention may be a rubber molded article such as a glove, a boot, a sandal, a goggle, a swimming goggle, a wristband, a watch strap, or a toy.

The laminate of the invention may be a resin molded article such as an eyeglass frame, a watch strap, a bangle, or a tabletop.

When the laminate of the invention is a fiber, this fiber can be used for clothes, gloves, hats, shoes, bags, and table cloths.

The laminate of the invention may be a molded article such as a protective cover for automobile seats, a protective cover for bicycle saddles, an automobile interior part, a protective sheet for furniture, a watch belt, a belt for holding an article (excluding watches) on the body, a housing of a portable electronic device, and a protective cover for portable electronic devices. Examples of the automobile interior part include door trims, center clusters, shift knobs, parts around shift knobs, steering wheels, steering wheel emblems, armrests, console boxes, seats, and seat belts.

### EXAMPLES

The invention will be described referring to, but not limited to, examples.

The parameters in the examples were determined by the following methods.

### (Average particle size)

The average particle size was measured with a transmission electron microscope (TEM) if it was 10 nm or greater, and was measured by dynamic light scattering (DLS) if it was smaller than 10 nm. In the case of TEM measurement, a fluororesin aqueous dispersion obtained was diluted with deionized water such that the fluororesin solid concentration became 100 ppm relative to water. The diluted fluororesin aqueous dispersion was then attached to an observation Cu mesh and dried. Thereby, a sample-carrying mesh was prepared. Using a TEM, the particle sizes of the fluororesin particles on the sample-carrying mesh were observed and an electron micrograph was taken. Thereby, the average particle size was determined. In the case of DLS measurement, the average particle size was defined as a value determined from 70 measurement processes using ELSZ-1000S (Otsuka Electronics Co., Ltd.) at 25°C with the solid concentration of the fluororesin being adjusted to 1.0 mass%. The refractive index of the solvent (water) was 1.3328 and the viscosity of the solvent (water) was 0.8878 mPa·s.

### (Composition of fluororesin)

The composition was determined by any appropriate combination of NMR, FT-IR, elemental analysis, and X-ray fluorescence analysis in accordance with the types of the monomers.

### (Melting point)

The melting point was determined as a temperature corresponding to the local maximum on a heat-of-fusion curve obtained by heating 3 mg of a sample having no history of being heated up to 300°C or higher using a differential scanning calorimeter (DSC) at a temperature-increasing rate of 10°C/min.

### (Melt flow rate (MFR))

The MFR was determined as the mass (g/10 min) of a polymer flowed out of a nozzle (inner diameter: 2 mm, length: 8 mm) per 10 minutes using a melt indexer (Yasuda Seiki Seisakusho Ltd.) by the method in conformity with ASTM D1238 at a predetermined measurement temperature and load depending on the type of the fluoropolymer (for example, the temperature is 372°C for PFA and FEP, 297°C for ETFE, and 380°C for PTFE, and the load is 5 kg for PFA, FEP, ETFE, and PTFE) .

If the amount of the polymer flowed out was a very minute amount and the mass of the polymer flowed out was difficult to determine, the MFR was defined as 0.2 g/10 min or less.

### (Solid concentration)

The solid concentration used was a value expressed as a percentage of the mass of heating residue relative to the mass (1 g) of the aqueous dispersion when 1 g of the coating material was dried in an air-flow dryer at 300°C for 60 minutes.

### Appearance evaluation

The appearance of a test sample coated with the coating material was evaluated in comparison with a test sample without coating. It is preferred that the appearance did not change.

### Tactile sensation test

A finger was moved in a horizontal direction while pressing the surface of a test sample in the vertical direction. The tactile sensation during this motion was evaluated. It is preferred that no squeakiness occurred.
0: Squeakiness occurred.
1: Squeakiness slightly occurred.
2: No squeakiness occurred.

### Stain resistance test

Navy-blue denim fabric (trade name: Levi's 501 jeans 00501-1484, Levi Strauss Japan) in a size of 1 cm × 2 cm was brought into contact with the surface of a test sample at a load of 700 g, and was rubbed against the sample by 50 reciprocating motions with a horizontal distance of 3 cm. After the rubbing, stain on the surface of the test sample was visually observed. This evaluation was made by comparing the portion where the denim fabric was brought into contact and the portion where the denim fabric was not brought into contact. It is preferred that no significant stain was observed.
0: Significant stain was observed.
1: Fairly significant stain was observed.
2: Slight but conspicuous stain was observed.
3: Slight stain was observed but not conspicuous.
4: No stain was observed.

### Example 1

Fluororubber, NR (natural rubber), IR (polyisoprene rubber), EPDM (ethylene-propylene-termonomer copolymerized rubber), butyl rubber, ACM (acrylic rubber), polyester fabric, and polypropylene nonwoven fabric were each cut into a size of 3 × 6 cm. They were used as base samples. The respective base samples were immersed in and coated with a coating material P1 shown in Table 1, withdrawn therefrom, and then dried at 110°C for three minutes. The resulting coated base samples were then subjected to the appearance evaluation, tactile sensation test, and stain resistance test. Tables 2 to 9 show the results.

### Example 2

The same process was performed as in Example 1 except that the coating material P1 was changed to a coating material P2 shown in Table 1.

### Example 3

The same process was performed as in Example 1 except that the coating material P1 was changed to a coating material P3 shown in Table 1.

### Example 4

The same process was performed as in Example 1 except that the coating material P1 was changed to a coating material P4 shown in Table 1.

### Example 5

The same process was performed as in Example 1 except that the coating material P1 was changed to a coating material P5 shown in Table 1.

### Example 6

The same process was performed as in Example 1 except that the coating material P1 was changed to a coating material P6 shown in Table 1.

### Example 7

The same process was performed as in Example 1 except that the coating material P1 was changed to a coating material P7 shown in Table 1.

### Example 8

The same process was performed as in Example 1 except that the coating material P1 was changed to a coating material P8 shown in Table 1.

### Comparative Example 1

The tactile sensation test and stain resistance test were performed without coating on the base samples as described in Example 1. Tables 2 to 9 show the results.

### Comparative Example 2

The same process was performed as in Example 1 except that the coating material P1 was changed to a coating material P9 shown in Table 1.

### Comparative Example 3

The same process was performed as in Example 1 except that the coating material P1 was changed to a coating material P10 shown in Table 1.

**[Table 1]**

| | Fluororesin | | | | | | Coating material | | | | |
|---|---|---|---|---|---|---|---|---|---|---|---|
| | | Average particle size | MFR | Modifying monomer | | Melting point | Fluororesin concentration | Polyoxyethylene alkyl ether concentration | Polon MF-56 (active ingredient) concentration | Water | Polon MF-56 active ingredient concentration relative to fluororesin |
| | | | | Type | Amount | | | | | | |
| | | nm | g/10 min | - | Mol% | °C | Mass% | Mass% | Mass% | Mass% | Mass% |
| P9 | PTFE | 218 | 21.1 | - | - | 327 | 3.0 | 2.0 | 2.2 | 92.8 | 30 |
| P1 | PTFE | 172 | 0.2 or less | - | - | 328 | 3.0 | 2.0 | 2.2 | 92.8 | 30 |
| P2 | PTFE | 126 | 0.2 or less | - | - | 329 | 3.0 | 2.0 | 0.3 | 94.7 | 4 |
| P3 | PTFE | 71 | 0.2 or less | - | - | 327 | 3.0 | 2.0 | 3.8 | 91.2 | 50 |
| P4 | PTFE | 7.0 | 0.2 or less | - | - | 329 | 3.0 | 2.0 | 12.0 | 83.0 | 160 |
| P5 | PTFE | 2.0 | 0.2 or less | - | - | 329 | 3.0 | 2.0 | 2.2 | 92.8 | 30 |
| P6 | FEP | 80 | 26.8 | HFP | 11.7 | 255 | 3.0 | 2.0 | 2.2 | 92.8 | 30 |
| P10 | PFA | 238 | 145 | PPVE | 1.31 | 316 | 3.0 | 2.0 | 2.2 | 92.8 | 30 |
| P7 | PFA | 164 | 160 | PPVE | 1.39 | 316 | 3.0 | 2.0 | 2.2 | 92.8 | 30 |
| P8 | PFA | 4.0 | 250 | PPVE | 1.52 | 319 | 3.0 | 2.0 | 2.2 | 92.8 | 30 |

| | | | | | | | | | | | |
|---|---|---|---|---|---|---|---|---|---|---|---|
| *Polon MF-56: Curable silicone resin (active ingredient: 40 mass%), Shin-Etsu Chemical Co., Ltd. | | | | | | | | | | | |

**[Table 2]**

| Base sample: fluororubber | | | | | | |
|---|---|---|---|---|---|---|
| | Coating material | Fluororesin | Average particle size (nm) | Appearance | Tactile sensation | Stain resistance |
| Comparative Example 1 | - | - | - | (Standard) | 0 | 0 |
| Comparative Example 2 | P9 | PTFE | 218 | Mottle | 1 | 2 |
| Example 1 | P1 | | 172 | No change | 2 | 4 |
| Example 2 | P2 | | 126 | No change | 2 | 4 |
| Example 3 | P3 | | 71 | No change | 2 | 4 |
| Example 4 | P4 | | 7.0 | No change | 2 | 4 |
| Example 5 | P5 | | 2.0 | No change | 2 | 4 |
| Example 6 | P6 | FEP | 80 | No change | 2 | 4 |
| Comparative Example 3 | P10 | PFA | 238 | Mottle | 1 | 2 |
| Example 7 | P7 | | 164 | No change | 2 | 4 |
| Example 8 | P8 | | 4.0 | No change | 2 | 4 |

**[Table 3]**

| Base sample: NR | | | | | | |
|---|---|---|---|---|---|---|
| | Coating material | Fluororesin | Average particle size (nm) | Appearance | Tactile sensation | Stain resistance |
| Comparative Example 1 | - | - | - | (Standard) | 0 | 0 |
| Comparative Example 2 | P9 | PTFE | 218 | Mottle | 1 | 2 |
| Example 1 | P1 | | 172 | No change | 2 | 4 |
| Example 2 | P2 | | 126 | No change | 2 | 4 |
| Example 3 | P3 | | 71 | No change | 2 | 4 |
| Example 4 | P4 | | 7.0 | No change | 2 | 4 |
| Example 5 | P5 | | 2.0 | No change | 2 | 4 |
| Example 6 | P6 | FEP | 80 | No change | 2 | 4 |
| Comparative Example 3 | P10 | PFA | 238 | Mottle | 1 | 2 |
| Example 7 | P7 | | 164 | No change | 2 | 4 |
| Example 8 | P8 | | 4.0 | No change | 2 | 4 |

**[Table 4]**

| Base sample: IR | | | | | | |
|---|---|---|---|---|---|---|
| | Coating material | Fluororesin | Average particle size (nm) | Appearance | Tactile sensation | Stain resistance |
| Comparative Example 1 | - | - | - | (Standard) | 0 | 0 |
| Comparative Example 2 | P9 | PTFE | 218 | Mottle | 1 | 2 |
| Example 1 | P1 | | 172 | No change | 2 | 4 |
| Example 2 | P2 | | 126 | No change | 2 | 4 |
| Example 3 | P3 | | 71 | No change | 2 | 4 |
| Example 4 | P4 | | 7.0 | No change | 2 | 4 |
| Example 5 | P5 | | 2.0 | No change | 2 | 4 |
| Example 6 | P6 | FEP | 80 | No change | 2 | 4 |
| Comparative Example 3 | P10 | PFA | 238 | Mottle | 1 | 2 |
| Example 7 | P7 | | 164 | No change | 2 | 4 |
| Example 8 | P8 | | 4.0 | No change | 2 | 4 |

**[Table 5]**

| Base sample: EPDM | | | | | | |
|---|---|---|---|---|---|---|
| | Coating material | Fluororesin | Average particle size (nm) | Appearance | Tactile sensation | Stain resistance |
| Comparative Example 1 | - | - | - | (Standard) | 0 | 0 |
| Comparative Example 2 | P9 | PTFE | 218 | Mottle | 1 | 2 |
| Example 1 | P1 | | 172 | No change | 2 | 4 |
| Example 2 | P2 | | 126 | No change | 2 | 4 |
| Example 3 | P3 | | 71 | No change | 2 | 4 |
| Example 4 | P4 | | 7.0 | No change | 2 | 4 |
| Example 5 | P5 | | 2.0 | No change | 2 | 4 |
| Example 6 | P6 | FEP | 80 | No change | 2 | 4 |
| Comparative Example 3 | P10 | PFA | 238 | Mottle | 1 | 2 |
| Example 7 | P7 | | 164 | No change | 2 | 4 |
| Example 8 | P8 | | 4.0 | No change | 2 | 4 |

**[Table 6]**

| Base sample: butyl rubber | | | | | | |
|---|---|---|---|---|---|---|
| | Coating material | Fluororesin | Average particle size (nm) | Appearance | Tactile sensation | Stain resistance |
| Comparative Example 1 | - | - | - | (Standard) | 0 | 0 |
| Comparative Example 2 | P9 | PTFE | 218 | Mottle | 1 | 2 |
| Example 1 | P1 | | 172 | No change | 2 | 4 |
| Example 2 | P2 | | 126 | No change | 2 | 4 |
| Example 3 | P3 | | 71 | No change | 2 | 4 |
| Example 4 | P4 | | 7.0 | No change | 2 | 4 |
| Example 5 | P5 | | 2.0 | No change | 2 | 4 |
| Example 6 | P6 | FEP | 80 | No change | 2 | 4 |
| Comparative Example 3 | P10 | PFA | 238 | Mottle | 1 | 2 |
| Example 7 | P7 | | 164 | No change | 2 | 4 |
| Example 8 | P8 | | 4.0 | No change | 2 | 4 |

**[Table 7]**

| Base sample: ACM | | | | | | |
|---|---|---|---|---|---|---|
| | Coating material | Fluororesin | Average particle size (nm) | Appearance | Tactile sensation | Stain resistance |
| Comparative Example 1 | - | - | - | (Standard) | 0 | 0 |
| Comparative Example 2 | P9 | PTFE | 218 | Mottle | 1 | 2 |
| Example 1 | P1 | | 172 | No change | 2 | 4 |
| Example 2 | P2 | | 126 | No change | 2 | 4 |
| Example 3 | P3 | | 71 | No change | 2 | 4 |
| Example 4 | P4 | | 7.0 | No change | 2 | 4 |
| Example 5 | P5 | | 2.0 | No change | 2 | 4 |
| Example 6 | P6 | FEP | 80 | No change | 2 | 4 |
| Comparative Example 3 | P10 | PFA | 238 | Mottle | 1 | 2 |
| Example 7 | P7 | | 164 | No change | 2 | 4 |
| Example 8 | P8 | | 4.0 | No change | 2 | 4 |

**[Table 8]**

| Base sample: polyester fabric | | | | | | |
|---|---|---|---|---|---|---|
| | Coating material | Fluororesin | Average particle size (nm) | Appearance | Tactile sensation | Stain resistance |
| Comparative Example 1 | - | - | - | (Standard) | 0 | 0 |
| Comparative Example 2 | P9 | PTFE | 218 | Mottle | 1 | 2 |
| Example 1 | P1 | | 172 | No change | 2 | 3 |
| Example 2 | P2 | | 126 | No change | 2 | 3 |
| Example 3 | P3 | | 71 | No change | 2 | 3 |
| Example 4 | P4 | | 7.0 | No change | 2 | 3 |
| Example 5 | P5 | | 2.0 | No change | 2 | 3 |
| Example 6 | P6 | FEP | 80 | No change | 2 | 3 |
| Comparative Example 3 | P10 | PFA | 238 | Mottle | 1 | 1 |
| Example 7 | P7 | | 164 | No change | 2 | 3 |
| Example 8 | P8 | | 4.0 | No change | 2 | 3 |

**[Table 9]**

| Base sample: polypropylene nonwoven fabric | | | | | | |
|---|---|---|---|---|---|---|
| | Coating material | Fluororesin | Average particle size (nm) | Appearance | Tactile sensation | Stain resistance |
| Comparative Example 1 | - | - | - | (Standard) | 0 | 0 |
| Comparative Example 2 | P9 | PTFE | 218 | Mottle | 1 | 1 |
| Example 1 | P1 | | 172 | No change | 2 | 3 |
| Example 2 | P2 | | 126 | No change | 2 | 3 |
| Example 3 | P3 | | 71 | No change | 2 | 3 |
| Example 4 | P4 | | 7.0 | No change | 2 | 3 |
| Example 5 | P5 | | 2.0 | No change | 2 | 3 |
| Example 6 | P6 | FEP | 80 | No change | 2 | 3 |
| Comparative Example 3 | P10 | PFA | 238 | Mottle | 1 | 1 |
| Example 7 | P7 | | 164 | No change | 2 | 3 |
| Example 8 | P8 | | 4.0 | No change | 2 | 3 |

### Example 9

A coating material was prepared so as to be the same as the coating material P1 shown in Table 1 except that Polon MF-56 was changed to IE7170 (Dow Corning Toray Co., Ltd., active ingredient: 48 mass%) with the same active ingredient content. A fluororubber (3 × 6 cm) was immersed therein, withdrawn therefrom, and then dried at 110°C for three minutes. The resulting coated sample was subjected to the appearance evaluation, tactile sensation test, and stain resistance test. As a result, the appearance did not change, the tactile sensation score was 2, and the stain resistance score was 3.

### Example 10

A coating material was prepared so as to be the same as the coating material P5 shown in Table 1 except that Polon MF-56 was changed to Polon MF-40 (Shin-Etsu Chemical Co., Ltd., active ingredient: 38 mass%) with the same active ingredient content. A fluororubber (3 × 6 cm) was immersed therein, withdrawn therefrom, and then dried at 110°C for three minutes. The resulting coated sample was subjected to the appearance evaluation, tactile sensation test, and stain resistance test. As a result, the appearance did not change, the tactile sensation score was 2, and the stain resistance score was 3.

### Example 11

A coating material was prepared so as to be the same as the coating material P3 shown in Table 1 except that Polon MF-56 was changed to KM-2002L-1 (Shin-Etsu Chemical Co., Ltd., active ingredient: 44 mass%) with the same active ingredient content. A fluororubber (3 × 6 cm) was immersed therein, withdrawn therefrom, and then dried at 110°C for three minutes. The resulting coated sample was subjected to the appearance evaluation, tactile sensation test, and stain resistance test. As a result, the appearance did not change, the tactile sensation score was 2, and the stain resistance score was 3.

### Example 12

A coating material was prepared so as to be the same as the coating material P2 shown in Table 1 except that Polon MF-56 was changed to X-51-1318 (Shin-Etsu Chemical Co., Ltd., active ingredient: 40 mass%) with the same active ingredient content. A fluororubber (3 × 6 cm) was immersed therein, withdrawn therefrom, and then dried at 110°C for three minutes. The resulting coated sample was subjected to the appearance evaluation, tactile sensation test, and stain resistance test. As a result, the appearance did not change, the tactile sensation score was 2, and the stain resistance score was 3.

### Example 13

A coating material was prepared so as to be the same as the coating material P8 shown in Table 1 except that Polon MF-56 was changed to KM-2002T (Shin-Etsu Chemical Co., Ltd., active ingredient: 40 mass%) with the same active ingredient content on the basis of the coating material P8 shown in Table 1. A fluororubber (3 × 6 cm) was immersed therein, withdrawn therefrom, and then dried at 110°C for three minutes. The resulting coated sample was subjected to the appearance evaluation, tactile sensation test, and stain resistance test. As a result, the appearance did not change, the tactile sensation score was 2, and the stain resistance score was 3.

### Example 14

Polon MF-14 (Shin-Etsu Chemical Co., Ltd., active ingredient: 15 mass%) containing the active ingredient in an amount of 50 mass% on the basis of the mass of the active ingredient in IE7170 (Dow Corning Toray Co., Ltd., active ingredient: 48 mass%) contained in the coating material of Example 9 was added to the coating material of Example 9. A fluororubber (3 × 6 cm) was immersed in this coating material, withdrawn therefrom, and then dried at 110°C for three minutes. The resulting coated sample was subjected to the appearance evaluation, tactile sensation test, and stain resistance test. As a result, the appearance did not change, the tactile sensation score was not lower than 2, and the stain resistance score was not lower than 3. In other words, the coating material imparted a moist feel.

### Example 15

Polon MF-18T (Shin-Etsu Chemical Co., Ltd., active ingredient: 37 mass%) containing the active ingredient in an amount of 50 mass% on the basis of the mass of the active ingredient in Polon MF-40 (Shin-Etsu Chemical Co., Ltd., active ingredient: 38 mass%) contained in the coating material of Example 10 was added to the coating material of Example 10. A fluororubber (3 × 6 cm) was immersed in this coating material, withdrawn therefrom, and then dried at 110°C for three minutes. The resulting coated sample was subjected to the appearance evaluation, tactile sensation test, and stain resistance test. As a result, the appearance did not change, the tactile sensation score was not lower than 2, and the stain resistance score was not lower than 3. In other words, the coating material imparted a moist feel.

### Example 16

SM8716SR (Dow Corning Toray Co., Ltd., active ingredient: 40 mass%) containing the active ingredient in an amount of 50 mass% on the basis of the mass of the active ingredient in KM-2002L-1 (Shin-Etsu Chemical Co., Ltd., active ingredient: 44 mass%) contained in the coating material of Example 11 was added to the coating material of Example 11. A fluororubber (3 × 6 cm) was immersed in this coating material, withdrawn therefrom, and then dried at 110°C for three minutes. The resulting coated sample was subjected to the appearance evaluation, tactile sensation test, and stain resistance test. As a result, the appearance did not change, the tactile sensation score was not lower than 2, and the stain resistance score was not lower than 3. In other words, the coating material imparted a moist feel.

### Example 17

FZ-4634EX (Dow Corning Toray Co., Ltd., active ingredient: 43 mass%) containing the active ingredient in an amount of 50 mass% on the basis of the mass of the active ingredient in X-51-1318 (Shin-Etsu Chemical Co., Ltd., active ingredient: 40 mass%) contained in the coating material of Example 12 was added to the coating material of Example 12. A fluororubber (3 × 6 cm) was immersed in this coating material, withdrawn therefrom, and then dried at 110°C for three minutes. The resulting coated sample was subjected to the appearance evaluation, tactile sensation test, and stain resistance test. As a result, the appearance did not change, the tactile sensation score was not lower than 2, and the stain resistance score was not lower than 3. In other words, the coating material imparted a moist feel.

### Example 18

X-51-1264 (Shin-Etsu Chemical Co., Ltd., active ingredient: 32 mass%) containing the active ingredient in an amount of 50 mass% on the basis of the mass of the active ingredient in KM-2002T (Shin-Etsu Chemical Co., Ltd., active ingredient: 40 mass%) contained in the coating material of Example 13 was added to the coating material of Example 13. A fluororubber (3 × 6 cm) was immersed in this coating material, withdrawn therefrom, and then dried at 110°C for three minutes. The resulting coated sample was subjected to the appearance evaluation, tactile sensation test, and stain resistance test. As a result, the appearance did not change, the tactile sensation score was not lower than 2, and the stain resistance score was not lower than 3. In other words, the coating material imparted a moist feel.

### Comparative Example 4

A coating material (containing 267 mass% of the curable silicone resin relative to the fluororesin) was prepared in which the amount of Polon MF-56 was changed to 20.0 mass% and the amount of water was changed to 75.0 mass% on the basis of the coating material P1 shown in Table 1. A fluororubber (3 × 6 cm) was immersed therein, withdrawn therefrom, and then dried at 110°C for three minutes. The resulting coated sample was subjected to the tactile sensation test, and was found to exhibit slight squeakiness; the evaluation score in the tactile sensation test was 1.

### Comparative Example 5

A coating material was prepared containing 20.0 mass% of Polon MF-56 and 80.0 mass% of water. A fluororubber (3 × 6 cm) was immersed therein, withdrawn therefrom, and then dried at 110°C for three minutes. The resulting coated sample was subjected to the tactile sensation test, and was found to exhibit squeakiness; the evaluation score in the tactile sensation test was 0.

## Claims

1. A coating material comprising:
- fluororesin primary particles having an average particle size of 0.2-200 nm;
- a curable silicone resin in an amount of 0.1-250 mass-% relative to the fluororesin primary particles; and
- water;
wherein the fluororesin primary particles are formed from at least one selected from the group consisting of homo-polytetrafluoroethylene, modified polytetrafluoroethylene comprising tetrafluoroethylene units and modifying monomer units in an amount of 0.001 to 2 mol%, the modifying monomer units being derived from one or more monomers that are copolymerizable with tetrafluoroethylene, and melt-fabricable fluroresins selected from tetrafluoroethylene/perfluoro(alkyl vinyl ether) copolymers and tetrafluoroethylene/hexafluoropropylene copolymers.

2. The coating material of claim 1, which further comprises a silicone oil.

3. The coating material of claim 1 or 2, which further comprises a surfactant.

4. The use of the coating material of any of claims 1-3 as an agent for imparting a tactile sensation, an agent for imparting stain resistance, an agent for imparting smoothness, or an agent for imparting a refreshing sensation.

5. The use of claim 4, wherein coating material is a coating material for rubber, a coating material for resin, or a coating material for fiber.

6. The use of claim 4 or 5, wherein the coating material is applied to a base formed from at least one of fluororubber, acrylonitrile-butadiene rubber, hydrogenated acrylonitrile-butadiene rubber, styrene-butadiene rubber, polychloroprene rubber, polybutadiene rubber, natural rubber, polyisoprene rubber, ethylene-propylene rubber, ethylene-propylene-termonomer copolymerized rubber, silicone rubber, butyl rubber, epichlorohydrin rubber, urethane rubber, acrylic rubber, and chlorosulfonated polyethylene rubber.

7. The use of claim 6, wherein the coating material is applied to a base formed from fluororubber.

8. A laminate comprising:
- a base; and
- a film that is disposed on the base and is formed from the coating material of any of claims 1-3,
- the film containing fluororesin primary particles having an average particle size of 0.2-200 nm and being present as projections on the surface of the film to constitute textures on the film surface.

9. The laminate of claim 8, wherein the fluororesin primary particles occupy ≥ 10% of the area of the film surface.

10. The laminate of claim 8 or 9, wherein the base is formed from at least one selected from fluororubber, acrylonitrile-butadiene rubber, hydrogenated acrylonitrile-butadiene rubber, styrene-butadiene rubber, polychloroprene rubber, polybutadiene rubber, natural rubber, polyisoprene rubber, ethylene-propylene rubber, ethylene-propylene-termonomer copolymerized rubber, silicone rubber, butyl rubber, epichlorohydrin rubber, urethane rubber, acrylic rubber, and chlorosulfonated polyethylene rubber.

11. The laminate of any of claims 8-10, wherein the base is formed from fluororubber.

12. The laminate of any of claims 8-11, which is an accessory, an automobile interior or exterior part, a container for cosmetics, a toy, a piece of furniture, or a home appliance.

## Patentansprüche

1. Beschichtungsmaterial, umfassend:
- Fluorharz-Primärpartikel mit einer durchschnittlichen Partikelgröße von 0,2-200 nm;
- ein härtbares Silikonharz in einer Menge von 0,1-250 Massen-% relativ zu den Fluorharz-Primärpartikeln; und
- Wasser;
wobei die Fluorharz-Primärpartikel aus mindestens einem gebildet sind, ausgewählt aus der Gruppe bestehend aus Homo-Polytetrafluorethylen, modifiziertem Polytetrafluorethylen, das Tetrafluorethyleneinheiten und modifizierende Monomereinheiten in einer Menge von 0,001 bis 2 Mol-% umfasst, wobei die modifizierenden Monomereinheiten aus einem oder mehreren Monomer(en) erhalten sind, das/die mit Tetrafluorethylen copolymerisierbar ist/sind, und schmelzverarbeitbaren Fluorharzen, ausgewählt aus Tetrafluorethylen/Perfluor(alkylvinylether)-Copolymeren und Tetrafluorethylen/Hexafluorpropylen-Copolymeren.

2. Beschichtungsmaterial gemäß Anspruch 1, das ferner ein Silikonöl umfasst.

3. Beschichtungsmaterial gemäß Anspruch 1 oder 2, das ferner ein Tensid enthält.

4. Verwendung des Beschichtungsmaterials gemäß einem der Ansprüche 1-3 als Mittel zum Verleihen eines taktilen Gefühls, als Mittel zum Verleihen von Anfleckbeständigkeit, als Mittel zum Verleihen von Glätte oder als Mittel zum Verleihen eines erfrischenden Gefühls.

5. Verwendung gemäß Anspruch 4, wobei das Beschichtungsmaterial ein Beschichtungsmaterial für Gummi, ein Beschichtungsmaterial für Harz oder ein Beschichtungsmaterial für Fasern ist.

6. Verwendung gemäß Anspruch 4 oder 5, wobei das Beschichtungsmaterial auf eine Basis aufgetragen wird, die gebildet ist aus mindestens einem von Fluorkautschuk, Acrylnitril-Butadien-Kautschuk, hydriertem Acrylnitril-Butadien-Kautschuk, Styrol-Butadien-Kautschuk, Polychlorpren-Kautschuk, Polybutadien-Kautschuk, natürlichem Kautschuk, Polyisopren-Kautschuk, Ethylen-Propylen-Kautschuk, Ethylen-Propylen-Termonomer-Copolymerkautschuk, Silikon-Kautschuk, Butyl-Kautschuk, Epichlorhydrin-Kautschuk, Urethan-Kautschuk, Acryl-Kautschuk und chlorsulfoniertem Polyethylen-Kautschuk.

7. Verwendung gemäß Anspruch 6, wobei das Beschichtungsmaterial auf eine aus Fluorkautschuk gebildete Basis aufgebracht wird.

8. Laminat, umfassend:
- eine Basis; und
- ein Film, der auf der Basis angeordnet und aus dem Beschichtungsmaterial gemäß irgendeinem der Ansprüche 1-3 gebildet ist,
- wobei der Film Fluorharz-Primärpartikel enthält, die eine mittlere Partikelgröße von 0,2-200 nm aufweisen und als Vorstöße auf der Oberfläche des Films vorhanden sind, um Texturen auf der Filmoberfläche zu bilden.

9. Laminat gemäß Anspruch 8, wobei die Fluorharz-Primärpartikel ≥ 10% der Fläche der Filmoberfläche einnehmen.

10. Laminat gemäß Anspruch 8 oder 9, wobei die Basis aus mindestens einem gebildet ist, das ausgewählt ist aus Fluorkautschuk, Acrylnitril-Butadien-Kautschuk, hydriertem Acrylnitril-Butadien-Kautschuk, Styrol-Butadien-Kautschuk, Polychlorpren-Kautschuk, Polybutadien-Kautschuk, natürlichem Kautschuk, Polyisopren-Kautschuk, Ethylen-Propylen-Kautschuk, Ethylen-Propylen-Termonomer-Copolymerkautschuk, Silikon-Kautschuk, Butyl-Kautschuk, Epichlorhydrin-Kautschuk, Urethan-Kautschuk, Acryl-Kautschuk und chlorsulfoniertem Polyethylen-Kautschuk.

11. Laminat gemäß einem der Ansprüche 8-10, worin die Basis aus Fluorkautschuk gebildet ist.

12. Laminat gemäß einem der Ansprüche 8-11, bei dem es sich um ein Zubehörteil, ein Innen- oder Außenteil eines Automobils, einen Behälter für Kosmetika, ein Spielzeug, ein Möbelstück oder ein Haushaltsgerät handelt.

## Revendications

1. Matériau de revêtement comprenant:
- des particules primaires de résine fluorée ayant une taille de particule moyenne de 0,2-200 nm ;
- une résine silicone durcissable dans une quantité de 0,1-250 % en masse par rapport aux particules primaires de résine fluorée ; et
- de l'eau ;
dans lequel les particules primaires de résine fluorée sont formées d'au moins l'un choisi parmi le groupe constitué de homo-polytétrafluoroéthylène, polytétrafluoroéthylène modifié comprenant des unités tétrafluoroéthylène et des unités de monomères modifiantes dans une quantité de 0,001 à 2 % en mole, les unités de monomère modifiantes étant dérivées d'un ou plusieurs monomères qui sont copolymérisable avec du tétrafluoroéthylène, et des résines fluorées fabricables par fusion choisies parmi des copolymères tétrafluoroéthylène/perfluoro(alkyle vinyle éther) et des copolymères tétrafluoroéthylene/hexafluoropropylène.

2. Le matériau de revêtement de la revendication 1, qui comprend en outre une huile de silicone.

3. Le matériau de revêtement de la revendication 1 ou 2, qui comprend en outre un tensioactif.

4. L'utilisation du matériau de revêtement de l'une quelconque des revendications 1-3 en tant qu'agent pour donner une sensation tactile, agent pour donner de la douceur, ou agent pour donner une sensation de fraîcheur.

5. L'utilisation de la revendication 4, dans laquelle le matériau de revêtement est un matériau de revêtement pour caoutchouc, un matériau de revêtement pour résine, ou un matériau de revêtement pour fibre.

6. L'utilisation de la revendication 4 ou 5, dans laquelle le matériau de revêtement est appliqué à une base formée d'au moins l'un d'un caoutchouc fluoré, caoutchouc acrylonitrile-butadiène, caoutchouc acrylonitrile-butadiène hydrogéné, caoutchouc styrène-butadiène, caoutchouc polychloroprène, caoutchouc polybutadiène, caoutchouc naturel, caoutchouc polyisoprène, caoutchouc éthylène-propylène, caoutchouc éthylène-propylène-termonomère copolymérisé, caoutchouc silicone, caoutchouc butyle, caoutchouc épichlorohydrine, caoutchouc uréthane, caoutchouc acrylique, et caoutchouc polyéthylène chlorosulfoné.

7. L'utilisation de la revendication 6, dans laquelle le matériau de revêtement est appliqué à une base formée de caoutchouc fluoré.

8. Stratifié comprenant:
- une base; et
- un film qui est dispose sur la base et est formé à partir du matériau de revêtement de l'une quelconque des revendications 1-3 ;
- le film contenant des particules primaires de résine fluorée ayant une taille de particule moyenne de 0,2-200 nm et étant présentes comme projections sur la surface du film pour constituer des textures sur la surface de film.

9. Le stratifié de la revendication 8, dans lequel les particules primaires de résine fluorée occupent ≥ 10% de l'aire de la surface de film.

10. Le stratifié de la revendication 8 ou 9, dans lequel la base est formée à partir d'au moins l'un choisi parmi un caoutchouc fluoré, caoutchouc acrylonitrile-butadiène, caoutchouc acrylonitrile-butadiène hydrogéné, caoutchouc styrène-butadiène, caoutchouc polychloroprène, caoutchouc polybutadiène, caoutchouc naturel, caoutchouc polyisoprène, caoutchouc éthylène-propylène, caoutchouc éthylène-propylène-termonomère copolymérisé, caoutchouc silicone, caoutchouc butyle, caoutchouc épichlorohydrine, caoutchouc uréthane, caoutchouc acrylique, et caoutchouc polyéthylène chlorosulfoné.

11. Le stratifié de l'une quelconque des revendications 8-10, dans lequel la base est formée de caoutchouc fluoré.

12. Le stratifié de l'une quelconque des revendications 8-11, qui est un accessoire, une partie extérieure ou intérieure automobile, un récipient pour cosmétiques, un jouet, un meuble, ou un appareil de maison.
